# EUROPEAN PATENT APPLICATION

(11) **EP 4 344 999 A1**
(43) Date of publication of application: **03.04.2024**
(21) Application number: 22199021.1
(22) Date of filing: 30.09.2022
(51) Int. Cl.: B64C 9/16, B64C 11/00, B64C 29/00, B64D 27/02, B64D 27/24, B64C 27/00

(54) **CONTROL METHOD FOR AN AERIAL VEHICLE AND CONTROLLER**

(71) Applicant: Lilium eAircraft GmbH, 82234 Wessling (DE)
(72) Inventor: KORKMAZ, Kadir, 82234 Wessling (DE); WURDAK, Philipp, 82234 Wessling (DE)
(74) Representative: Grünecker Patent- und Rechtsanwälte PartG mbB

(57) **Abstract**

A control method for an aerial vehicle, the aerial vehicle comprising a propulsion unit (2) providing a thrust force to power the aerial vehicle and being attached to be movable with respect to a mounting portion (1a) of the aerial vehicle regarding at least one degree of freedom. To increase flight safety, a position and/or orientation of the propulsion unit with respect to the mounting portion is controlled via a closed-loop control using the thrust force as manipulated variable.

## Description

The present invention relates to a control method for an aerial vehicle wherein the aerial vehicle comprises a propulsion unit providing a thrust force to power the aerial vehicle and being attached to be movable with respect to a mounting portion of the aerial vehicle regarding at least one degree of freedom, and to a controller.

From DE102015207445 A1, an aerial vehicle having a wing comprising first and second lift generating bodies which are arranged in series along a flow direction of the wing is known. The second lift generating body is pivotally arranged with respect to the first lift generating body. Further, the second lift generating body has a jet engine arranged thereon. That is, the jet engine is pivotally provided with respect to the first lift generating body.

To pivot the jet engine with respect to the first lift generating body, servo actuators are used by which the orientation of the jet engine can be controlled. However, when such actuators are used for controlling the orientation of the jet engine a problem arises when the actuator based control does not work properly. In particular, the jet engine might freely pivot thereby endangering stability of an aerial vehicle. In flight, aerodynamic loads, mass loads, propulsion loads, and structural loads interact with each other and thus can enter into a destructive resonance regime which may result in fluttering. In order to prevent excessive fluttering, damper devices may be used. However, thereby the weight of the aerial vehicle and the complexity is increased.

The present invention has been made in view of the above mentioned circumstances and it is an object of the present invention to increase flight safety and stability while maintaining a compact configuration of the aerial vehicle.

Said object is achieved by a control method according to claim 1 and a control method according to claim 4.

According to a first aspect, there is provided a control method for an aerial vehicle, the aerial vehicle comprising a propulsion unit providing a thrust force to power the aerial vehicle and being attached to be movable with respect to a mounting portion of the aerial vehicle regarding at least one degree of freedom.

Differing from the prior art, the control method is characterized by a) a position and/or orientation of the propulsion unit with respect to the mounting portion is controlled via a closed-loop control using the thrust force as manipulated variable.

Thus, the position and/or orientation of the propulsion unit may be regulated. That is, fluttering may be actively reduced, preferably, completely suppressed. Thereby, flight stability and safety can be increased without need for further equipment such as dampers. Rather, the thrust can be manipulated to control the position and/or orientation of the propulsion unit.

It is preferable that an actuator device is provided controlling the position and/or orientation of the propulsion unit with respect to the mounting portion under an actuator control, and a) is performed upon determining failure in the actuator control.

Thus, under the actuator control, the thrust force may be adjusted in view of a required thrust force, while the accurate position and/or orientation of the propulsion unit may be controlled via the actuator device. However, when the actuator control fails, for example, due to a failure within the actuator device or a mechanical transmission between actuator device and the propulsion unit, the position and/or the orientation may still be controlled by manipulating the thrust force such that fluttering may be prevented.

Alternatively or additionally, target position and/or target orientation may depend on a flight state of the aerial vehicle, preferably is set such that a direction of the thrust force is aligned with the flight direction of a predetermined steady flight state, more preferably the target orientation is set such that a direction of the thrust force is aligned with the horizontal axis during cruise flight.

Thus, a stable steady flight state can be achieved. For example, cruise flight can be maintained. This aspect is in particular advantageous if a plurality of propulsion units are provided to the aerial vehicle. In this case, the other propulsion units need only compensate for the value of the manipulated thrust force without compensating for an orientation and/or position offset of the propulsion unit whose thrust force is manipulated.

According to another aspect, there is provided a control method for an aerial vehicle, the aerial vehicle comprising a propulsion unit providing a thrust force to power the aerial vehicle and being attached to be movable with respect to a mounting portion of the aerial vehicle regarding at least one degree of freedom.

Differing from the prior art, the control method is characterized by b) a deformation of the mounting portion is controlled via a closed-loop control using at least one of a position, orientation and thrust force of the propulsion unit as manipulated variable.

According to this aspect, the deformation of the mounting portion is controlled. That is, variation in the position and/or the orientation of a propulsion unit attached to the mounting portion also affect the deformation thereof by varying loads acting on the mounting portion which in turn may affect the flight stability and safety. For example, stall may occur to an airfoil being an example of a mounting portion. By means of b), the deformation of the mounting portion is actively controlled such that flight stability can be maintained.

It is preferable that a torsional deformation is controlled.

Thus, mechanical damages to the mounting portion by twist can be prevented. Also, aerodynamic stability can be maintained as the orientation of the mounting portion with respect to the airflow can be controlled. In particular, a torsional deformation around a horizontal transversal axis of the aerial vehicle may be controlled.

Additionally or alternatively, the propulsion unit may be one of a plurality of propulsion units attached to the mounting portion, and b) may be performed upon determining that control of a position and/or orientation of at least one other propulsion unit of the plurality of propulsion units and/or the at least one other propulsion unit itself has failed.

Thus, with the at least one other propulsion units not being controlled appropriately with respect to the mounting portion, the other propulsion unit may undergo fluttering which might affect the deformation of the mounting portion inappropriately. Thus, even if the other propulsion unit flutters, flight stability can be maintained by securing proper deformation of the mounting portion. In other words, when fluttering of at least one other propulsion unit is determined, b) is performed by modifying at least one of a position, orientation and thrust force of at least one propulsion unit.

In particular, b) may be performed by modifying at least one of a position, orientation and thrust force of at least two propulsion units when fluttering of at least one propulsion unit arranged between the at least two propulsion units along an arrangement direction of the propulsion units is determined.

Thus, the deformation of the mounting portion can be appropriately controlled by adjusting the loads acting on both sides of the propulsion unit which is fluttering.

It is preferable that a target deformation of the mounting portion depends on a flight state of the aerial vehicle and/or corresponds to a deformation of the mounting portion according to the cruise flight of the aerial vehicle during cruise flight of the aerial vehicle.

Hence, stability according to a predetermined flight state can be achieved. In particular, the behaviour during cruise flight can be established.

Alternatively or additionally, in b), the closed-loop control may comprise an elastic model, preferably an analytic model, of the mounting portion. In particular, the elastic model may be used to determine the actual deformation of the mounting portion

Thus, deformation of the mounting portion may be reliable determined. The analytic model allows for real time implementation of the control.

Alternatively or additionally, the controlled system may be modelled by an aeroelastic model of the mounting portion providing a relation between position and/or orientation and/or thrust force of at least one propulsion unit, preferably all propulsion units attached to the mounting portion, and the deformation of the mounting portion.

It is further preferable if the closed-loop control comprises an aeroelastic model of at least one propulsion unit, preferably of all propulsion units attached to the mounting portion, the aeroelastic model of at least one propulsion unit providing input to the aeroelastic model of the mounting portion.

Thus, forces transmitted to the mounting portion by the propulsion units can be taken into account appropriately.

Preferably, the propulsion unit comprises a flight control surface, more preferably, the propulsion unit functions as a flap of the aerial vehicle.

Thus, the propulsion unit does not only provide mass and thrust forces but also considerable aerodynamic forces such as lift. Thus, cancelling of flutter is advantageous in this regard.

Preferably, the propulsion unit is attached to the mounting portion to be rotatable about at least one rotation axis.

This enables thrust vectoring. In addition, the loads acting on the propulsion unit may change quickly in this configuration such that cancelling of flutter is advantageous in this regard.

It is further preferable that the propulsion unit is attached such that the thrust force acts with a lever arm regarding the rotation axis.

Hence, the thrust force can be easily used for control of the orientation of the propulsion unit with respect to the mounting portion.

Alternatively or additionally, the rotation axis may be parallel to a transversal horizontal axis of the aerial vehicle.

Thus, the propulsion unit may be exposed reliably to the air flow to generate thrust. Further, the acting loads are relatively large such that the controls according to a) and/or b) are beneficial in this regard.

Preferably, the propulsion unit is electrically driven.

Thus, quick response of the thrust force to any modification can be achieved and the control is facilitated.

Preferably, the mounting portion is a lift generating body, preferably an airfoil.

Thus, the aforementioned controls are particularly beneficial in view of flight stability. For example, the mounting portion may be a wing or a canard.

Still another aspect provides a controller configured to carry out the control method according to any of the preceding claims when mounted in the aerial vehicle.

Thus, the aforementioned effects can be achieved in the aerial vehicle having the controller.

The aforementioned aspects will be described in detail in the following by making reference to the accompanying drawings.
Fig. 1 shows a cross-sectional view of a portion of an aerial vehicle in a section perpendicular to a transversal horizontal axis of the aerial vehicle.
Fig. 2 shows an exemplary control loop of a control method according to the present invention.

The aerial vehicle comprises a wing 1. The wing comprises an airfoil 1a which is a lift generating body and an example of a mounting portion according to the present invention. The airfoil 1a extends along a transversal horizontal axis in the left-right direction of the aerial vehicle considering an aerial vehicle fixed coordinate system. The lift generating body generates lift when air flows along its outer periphery. That is, the outer periphery of the airfoil 1a comprises aerodynamic effective surfaces.

At a rear end portion, in particular, at a rear end, of the airfoil 1a, a propulsion unit 2 is attached to the airfoil 1a, and thus to the wing 1. The propulsion unit 2 is attached to be rotatable about a rotation axis 3 which also extends in the left-right direction and parallel to the transversal axis of the aerial vehicle.

Even though the propulsion unit 2 is shown to be directly attached to the airfoil 1a, it may also be attached indirectly via a bracket of the wing 1. Further, a plurality of propulsion units 2 may be attached to the mounting portion, preferably, along an arrangement direction parallel to the transversal axis.

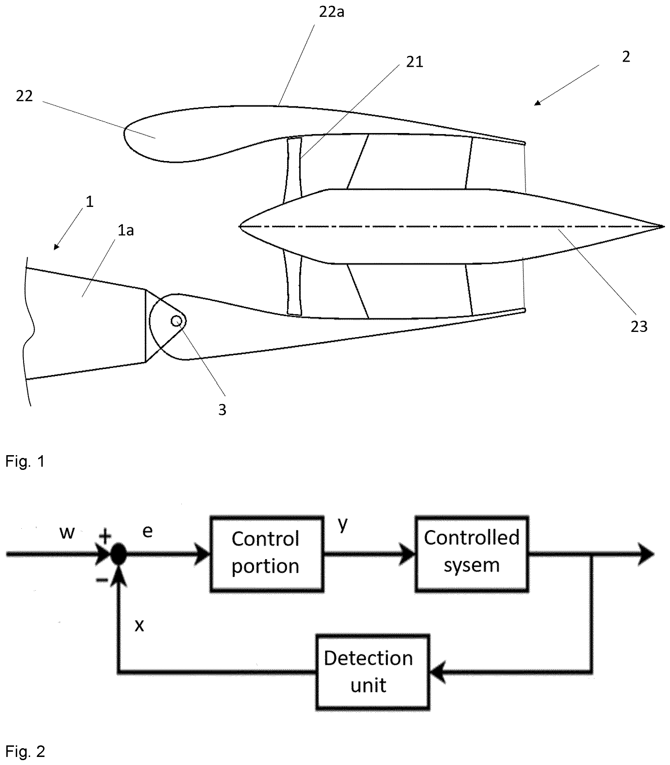

The propulsion unit 2 includes a thrust generating unit 21 which is configured to generate a thrust force. For example, the thrust generating unit 21 may be of a rotatable kind such as a fan. Further, even though not shown in Fig. 1, the propulsion unit 2 includes a power supply unit. The power supply unit may be a rotary electric machine such as an electric motor and provides power to drive the thrust generating unit 21. The thrust force provided by the propulsion unit 2 powers the aerial vehicle.

The propulsion unit 2 further comprises a flight control surface which is integrally formed with the propulsion unit 2. That is, the propulsion unit 2 comprises a subordinate lift generating body 22 having an aerodynamic effective outer periphery 22a as the flight control surface. In particular, the outer periphery has an aerodynamic effective profile. In the present case, the propulsion unit functions as a flap. The subordinate lift generating body 22 is formed by the housing of the propulsion unit 2.

An axis 23 of the propulsion unit 2 substantially runs through the center of the propulsion unit and is aligned with a direction of the generated thrust force. The axis 23 is thus a thrust force axis.

As can be taken from Fig. 1, the propulsion unit 2 is attached such that the thrust force acts with a lever arm with respect to the rotation axis 3. In other words, the thrust axis 23 does not intersect the rotation axis 3.

Fig. 1 shows the propulsion unit 2 in a state where the thrust axis 23 is aligned with the longitudinal horizontal axis which is perpendicular to the transversal horizontal axis.

Even though not shown, the aerial vehicle may further include an actuator device which is provided to move the propulsion unit 2 about the rotation axis 3. The actuator device may be an electric motor or a hydraulic device such as a hydraulic cylinder. The actuator device may include a mounting portion attached part which is attached to the mounting portion and a propulsion unit attached part which is attached to the propulsion unit and the propulsion unit attached part may be movable with respect to the mounting portion attached part. For example, the stator of the electric motor may be coupled to the mounting portion 1 and the rotor may be coupled to the propulsion unit 2.

The aerial vehicle further includes at least one detection unit such as a sensor, for example, to detect an orientation of the propulsion unit 2 with respect to the rotation axis 3.

The actuator device can control an orientation of the propulsion unit about the rotation axis 3 by providing an actuator load to the propulsion unit. Thus, the orientation can be controlled in view of the loads acting on the propulsion unit 2. The actuator device can compensate for forces caused by drag, lift, thrust, weight, and the like. Hence, orientation of the propulsion unit 2 may be appropriately controlled, preferably, using a feedback signal of the detection unit.

That is, it is preferable that the aerial vehicle is of a vertical-take-off-and-landing type. Hence, the propulsion unit 2 can be pivoted to an orientation such that the thrust axis is oriented upward in an up-down direction during take-off and landing and is orientated along a front-rear direction (longitudinal horizontal axis) during cruise flight.

However, the actuator control may fail, for example, by failure in a mechanical transmission between the actuator device and the propulsion unit 2.

In case the actuator control fails, the control according to Fig. 2 is established. It is to be noted that failure in the actuator control can be determined using the detection unit. For example, if the detection unit detects the orientation of the propulsion unit 2 with respect to the airfoil 1a, a deviation between the detected orientation and a target orientation being larger than an allowable deviation can be used to determine failure in the actuator control. However, alternatively a stress sensor may be arranged in the transmission path between the actuator device and the propulsion unit 2. If an excessive stress is detected, it may be determined that the actuator control has failed. A further way of determining failure in the actuator control can be established by comparison between two detection units arranged at different locations. For example, position and/or orientation sensors can be provided along the transmission path, for example, one in the actuator device, the other in the propulsion unit. Then, the signals of these detection units are compared, and if these signals do not have a predetermined correspondence, failure is determined.

Fig. 2 shows a control loop according to which the aerial vehicle may be controlled.

The aerial vehicle includes a controller configured to carry out the control according to Fig. 2.

The controller can include an internal memory such as a ROM, on which a target value w is stored.

As can be taken from below Table 1, according to a case where a control according to a) is performed, w is a target orientation with respect to the rotation axis 3. The target value w may depend on the flight state of the aerial vehicle. For example, if a desired predetermined or current flight state is cruise flight, w may be set according to the orientation depicted in Fig. 1, that is, the thrust axis may be parallel to the longitudinal horizontal axis and/or parallel to earth surface, in other words, being parallel to a global horizontal axis. In particular, the target orientation may be set in accordance with the orientation set when failure in the actuator control has been determined.

x is the orientation detected by the detection unit, that is the controlled variable. For example, a Hall sensor may be provided as the detection unit to detect the angular position (that is, the orientation) of the propulsion unit 2 with respect to the mounting portion 1.

The difference e = w - x designates the deviation which is input into the control portion implemented on the controller.

The control portion outputs a suitable value for the manipulated variable y which is the thrust force. In particular, the absolute value of the thrust force is manipulated. As the thrust vector acts with a lever arm with respect to the rotation axis 3, the orientation can be easily controlled by rotation of the propulsion unit.

**Table 1: quantities of control-loop in case of control according to a)**

| w | x | e | y |
|---|---|---|---|
| Orientation with respect to rotation axis 3 | Signal from detection unit indicating actual orientation | e = w - x | Thrust force |

The controlled system experiences disturbances such as varying aerodynamic loads. Thus, the controlled variable x is preferably detected repeatedly during flight.

In case not only the actuator control of the propulsion unit 2 has failed but also the propulsion unit 2 itself has failed due to mechanical failure, failure in control of the power supply unit or the like, the aforementioned control does not work properly.

Thus, the propulsion unit might experience fluttering and eventually enter a resonance regime. As a result, the loads acting on the airfoil 1a may deform the airfoil 1a such that stall of the air flow may occur, for example.

Thus, according to another aspect of the present invention, the control-loop of Fig. 2 may also be applied to control the deformation of the airfoil 1a according to the aforementioned b).

A target value w in such control, as can be taken from below Table 2, can be related to a target deformation. In particular, w can be a target deformation. w can have the form of a single discrete value, a vector, or a matrix. In particular, a plurality of points of the upper and/or lower surface, the leading and/or the rear edge of the airfoil 1a projected into the horizontal plane which is perpendicular to the up-down direction may be assigned with respective values in the up-down direction thereby providing a matrix of target points. Preferably, position values for a plurality of profile sections perpendicular to the transversal horizontal axis are specified, wherein in each section a plurality of points of the upper and/or lower surface, the leading and/or the rear edge are specified in terms of their positions.

The target deformation can also be specified by an analytic function for the entire airfoil or a plurality of sections along the transversal horizontal axis.

x may be a position or displacement signal detected by a position/displacement sensor provided at each of the points in the horizontal plane where a target value w is specified. However, the number of detection units must not match the number of target values. For example, for each section specified in terms of its target value a position sensor may be provided on the leading edge, on the rear edge, and on the line of the center of pressure. An elastic model may be used wherein the airfoil is preferably represented by a plate or beam model. Preferably, the elastic model can reflect torsional deformation, more preferably comprises torsional deformable elements. The elastic model uses the detected positions/displacements as constraints such that deformations on each point which is specified in terms of its target value can be calculated. That is, to determine the controlled variable x, an elastic model may be used.

The target value w and the controlled variable x may be specified and detected at least in one section along the horizontal transversal axis where a propulsion unit 2 is arranged.

In addition, at least one force detection unit may be provided in each of the specified profile sections. Thus, a force may be detected, for example, at the attachment position of the propulsion unit 2 to the mounting portion. This force may be input into the elastic model as a constraint such that the accuracy of the elastic model can be enhanced.

The difference e = w - x designates the deviation which is input into the control portion implemented on the controller.

**Table 2: quantities of control-loop in case of control according to b)**

| w | x | e | y |
|---|---|---|---|
| Deformation of airfoil 1a | Signal from detection unit indicating actual deformation | e = w - x | Orientation and/or thrust of at least one propulsion unit working properly |

The control portion determines an appropriate value for the manipulated variable y which can be a single discrete value, a vector or a matrix. For example, the control portion can determine an orientation and a thrust force of at least two propulsion units 2 sandwiching a propulsion unit 2 which has been determined to be failed along the transversal horizontal axis. Thus, a target deformation in the section according to the failed propulsion unit 2 can be appropriately controlled. In this regard, it is to be noted that, preferably, a plurality of propulsion units 2 are attached to the airfoil 1a in the same way as described above for the propulsion unit 2 such that an orientation thereof can be appropriately controlled by an actuator device.

In both of the above described controls a) and b), the controlled system can be modelled by an aeroelastic model. Thus, a transfer function of the system can be determined by means of the model.

In case of a), the aeroelastic model reflects the aeroelastic behaviour of the propulsion unit 2 whose orientation is controlled. That is, the propulsion unit is modelled in terms of aeroelasticity. The aeroelastic model can be parameterized in terms of the thrust force of the propulsion unit.

In case of b), the aeroelastic model reflects the aeroelastic behaviour of the airfoil 1a. Further aeroelastic models of the individual propulsion units 2 can provide input to the aeroelastic model of the airfoil 1a such that the aeroelastic model can be parameterized in terms of the orientation and/or the thrust force of the propulsion units 2.

The control portion can be implemented based on the transfer function according to the aeroelastic models.

Effects of the present invention will be described in the following.

As the control according to a) is carried out, a position and/or orientation of the propulsion unit 2 with respect to the mounting portion 1a is controlled via a closed-loop control using the thrust force as manipulated variable.

Thus, the position and/or orientation of the propulsion unit 2 may be regulated. That is, fluttering may be actively reduced, preferably, completely suppressed. Thereby, flight stability and safety can be increased without need for further equipment such as dampers. Rather, the thrust can be manipulated to control the position and/or orientation of the propulsion unit 2.

Further, an actuator device is provided controlling the position and/or orientation of the propulsion unit 2 with respect to the mounting portion 1a under an actuator control, and a) is performed upon determining failure in the actuator control.

Thus, under the actuator control, the thrust force may be adjusted in view of a required thrust force, while the accurate position and/or orientation of the propulsion unit 2 may be controlled via the actuator device. However, when the actuator control fails, for example, due to a failure within the actuator device or a mechanical transmission between actuator device and the propulsion unit 2, the position and/or the orientation may still be controlled by manipulating the thrust force such that fluttering may be prevented.

The target orientation w may depend on a flight state of the aerial vehicle, preferably is set such that a direction of the thrust force is aligned with the flight direction of a predetermined steady flight state, more preferably the target orientation is set such that a direction of the thrust force is aligned with the horizontal axis during cruise flight. To this end, in the method the flight state (a current or predetermined desired flight state) may be determined, in particular, by the controller, and the target orientation or position can be set in accordance with the flight state.

Thus, a stable steady flight state can be achieved. For example, cruise flight can be maintained. If a plurality of propulsion units 2 are provided to the aerial vehicle, the other propulsion units 2 need only compensate for the value of the manipulated thrust force without compensating for an orientation offset of the propulsion unit 2 whose thrust force is manipulated.

Further, there is provided a control according to b).

Thus, the deformation of the mounting portion (airfoil 1a) is controlled. That is, variation in the position and/or the orientation of a propulsion unit attached to the mounting portion also affect the deformation thereof by varying loads acting on the mounting portion which in turn may affect the flight stability and safety. For example, stall may occur to an airfoil being an example of a mounting portion. By means of b), the deformation of the mounting portion is actively controlled such that flight stability can be maintained.

As it has been presented above, a torsional deformation of the arifoil 1a is controlled.

Thus, mechanical damages to the mounting portion by twist can be prevented. Also, aerodynamic stability can be maintained as the orientation of the mounting portion with respect to the airflow can be controlled. In particular, a torsional deformation around a horizontal transversal axis of the aerial vehicle is controlled.

The propulsion unit 2 whose thrust force and/or orientation is controlled is one of a plurality of propulsion units 2 attached to the mounting portion, and b) is performed upon determining that control of a position and/or orientation of at least one other propulsion unit of the plurality of propulsion units 2 and/or the at least one other propulsion unit 2 itself has failed.

Thus, with the at least one other propulsion units not being controlled appropriately with respect to the mounting portion, the other propulsion unit may undergo fluttering which might affect the deformation of the mounting portion inappropriately. Thus, even if the other propulsion unit flutters, flight stability can be maintained by securing proper deformation of the mounting portion. In other words, when fluttering of at least one other propulsion unit is determined, b) is performed by modifying at least one of a position, orientation and thrust force of the at least one propulsion unit 2.

In particular, b) is performed by modifying orientation and thrust force of at least two propulsion units when fluttering of at least one propulsion unit arranged between the at least two propulsion units along an arrangement direction of the propulsion units is determined.

Thus, the deformation of the mounting portion can be appropriately controlled by adjusting the loads acting on both sides of the propulsion unit which is fluttering.

In b) it is preferable that the target deformation w of the mounting portion depends on a flight state of the aerial vehicle. For example, during cruise flight the target deformation can correspond to a deformation of the mounting portion according to the cruise flight of the aerial vehicle. To this end, in the method the flight state may be determined, in particular, by the controller.

Hence, stability according to a predetermined flight state can be achieved. In particular, the behaviour during cruise flight can be established.

As it has been described above, in b) the closed-loop control comprises an elastic model, preferably an analytic model, of the mounting portion. In particular, the elastic model may be used to determine the actual deformation of the mounting portion

Thus, deformation of the mounting portion may be reliable determined. The analytic model allows for real time implementation of the control.

The controlled system may be modelled by an aeroelastic model of the mounting portion providing a relation between position and/or orientation and/or thrust force of at least one propulsion unit, preferably all propulsion units attached to the mounting portion, and the deformation of the mounting portion.

It is further preferable if the closed-loop control comprises an aeroelastic model of at least one propulsion unit, preferably of all propulsion units attached to the mounting portion, the aeroelastic model of at least one propulsion unit providing input to the aeroelastic model of the mounting portion.

Thus, forces transmitted to the mounting portion by the propulsion units 2 can be taken into account appropriately.

The propulsion unit 2 comprises a flight control surface 22a. Also, the propulsion unit 2 functions as a flap of the aerial vehicle.

Thus, the propulsion unit 2 does not only provide mass and thrust forces but also considerable aerodynamic forces such as lift. Thus, cancelling of flutter is advantageous in this regard.

The propulsion unit 2 is attached to the mounting portion 1a to be rotatable about the rotation axis 3.

This enables thrust vectoring. In addition, the loads acting on the propulsion unit 2 may change quickly in this configuration such that cancelling of flutter is advantageous in this regard.

The propulsion unit 2 is attached such that the thrust force acts with a lever arm regarding the rotation axis 3.

Hence, the thrust force can be easily used for control of the orientation of the propulsion unit 2 with respect to the mounting portion.

The rotation axis 3 is parallel to a transversal horizontal axis of the aerial vehicle.

Thus, the propulsion unit may be exposed reliably to the air flow to generate thrust. Further, the acting loads are relatively large such that the controls according to a) and/or b) are beneficial in this regard.

The propulsion unit 2 is electrically driven.

Thus, quick response of the thrust force to any modification can be achieved and the control is facilitated.

The mounting portion is a lift generating body, in particular an airfoil.

Thus, the aforementioned controls are particularly beneficial in view of flight stability. For example, the mounting portion may be a wing or a canard.

In the above, it is stated that a target value depends on the flight state, this comprises an interpretation where the target value varies with different flight states.

In each of the control a) and b), the target value w may be a fixed value at least during a steady flight state.

Even though in the above, the propulsion unit is attached to be rotatable with respect to the mounting portion, it is also possible that the propulsion unit is attached to be displaceable. Then, a position with respect to the mounting portion may be manipulated.

In b), deformation has been controlled without focussing on a specific deformation mode. However, it should be noted that torsional deformation with respect to sections perpendicular to the horizontal transversal axis may be controlled in particular. In this case, the target value may specify target twist angles in a plurality of sections along the transversal horizontal axis, for example. The actual torsional deformation may be calculated from the elastic model using the signals of the displacement and/or position sensors as input. Also a bending deformation of the mounting portion along the transversal horizontal axis may be controlled alternatively or in addition to the torsional deformation.

## Claims

1. A control method for an aerial vehicle,
the aerial vehicle comprising a propulsion unit (2) providing a thrust force to power the aerial vehicle and being attached to be movable with respect to a mounting portion (1a) of the aerial vehicle regarding at least one degree of freedom,
**characterized in that**
a) a position and/or orientation of the propulsion unit (2) with respect to the mounting portion (1a) is controlled via a closed-loop control using the thrust force as manipulated variable.

2. The control method according to claim 1,
wherein an actuator device is provided controlling the position and/or orientation of the propulsion unit (2) under an actuator control, and
a) is performed upon determining failure in the actuator control.

3. The control method according to claim 1 or claim 2,
wherein a target position and/or target orientation depends on a flight state of the aerial vehicle, preferably is set such that a direction of the thrust force is aligned with the flight direction of a predetermined steady flight state, more preferably the target orientation is set such that a direction of the thrust force is aligned with the horizontal axis during cruise flight.

4. A control method for an aerial vehicle,
the aerial vehicle comprising a propulsion unit (2) providing a thrust force to power the aerial vehicle and being attached to be movable with respect to a mounting portion (1a) of the aerial vehicle regarding at least one degree of freedom,
**characterized in that**
b) a deformation of the mounting portion is controlled via a closed-loop control using at least one of a position, orientation and thrust force of the propulsion unit as manipulated variable.

5. The control method according to claim 4,
wherein a torsional deformation is controlled.

6. The control method according to claim 4 or claim 5,
wherein the propulsion unit (2) is one of a plurality of propulsion units attached to the mounting portion (1a),
and b) is performed upon determining that control of a position and/or orientation of at least one other propulsion unit (2) of the plurality of propulsion units (2) and/or the at least one other propulsion unit itself has failed.

7. The control method according to any of claims 4 to 6,
wherein a target deformation of the mounting portion (1a) depends on a flight state of the aerial vehicle and/or corresponds to a deformation of the mounting portion (1a) according to the cruise flight of the aerial vehicle during cruise flight of the aerial vehicle.

8. The control method according to any of claims 4 to 7,
wherein in b) the closed-loop control comprises an elastic model, preferably an analytic model, of the mounting portion.

9. The control method according to any of the preceding claims,
wherein the propulsion unit (2) comprises a flight control surface (22a), preferably, the propulsion unit (2) functions as a flap of the aerial vehicle.

10. The control method according to any of the preceding claims,
wherein the propulsion unit (2) is attached to the mounting portion to be rotatable about at least one rotation axis (3).

11. The control method according to claim 10,
wherein the propulsion unit (2) is attached such that the thrust force acts with a lever arm regarding the rotation axis (3).

12. The control method according to claim 11 or claim 12,
wherein the rotation axis (3) is parallel to a transversal horizontal axis of the aerial vehicle.

13. The control method according to any of the preceding claims,
wherein the propulsion unit (2) is electrically driven.

14. The control method according to any of the preceding claim, wherein the mounting portion (1a) is a lift generating body, preferably an airfoil.

15. A controller configured to carry out the control method according to any of the preceding claims when mounted in the aerial vehicle.
